# EUROPÄISCHE PATENTSCHRIFT

(11) **EP 2 160 831 B1**
(45) Veröffentlichungstag und Bekanntmachung des Hinweises auf die Patenterteilung: **07.03.2018**
(21) Anmeldenummer: 08761006.9
(22) Anmeldetag: 13.06.2008
(51) Int. Cl.: H02P 6/18, H02P 8/00, H02P 6/185, H02P 8/42

(54) **VERFAHREN UND SCHALTUNGSANORDNUNG ZUM BETREIBEN EINES BÜRSTENLOSEN GLEICHSTROMMOTORS**
METHOD AND CIRCUIT ARRANGEMENT FOR OPERATING A BRUSHLESS DC MOTOR
PROCÉDÉ ET CIRCUIT PERMETTANT DE FAIRE FONCTIONNER UN MOTEUR À COURANT CONTINU SANS BALAIS

(30) Priorität: 20.06.2007 DE 102007028384
(43) Veröffentlichungstag der Anmeldung: 10.03.2010
(73) Patentinhaber: Robert Bosch GmbH, 70442 Stuttgart (DE)
(72) Erfinder: KNECHT, Gerhard, 76473 Iffezheim (DE)
(86) Internationale Anmeldenummer: PCT/EP2008/057481
(87) Internationale Veröffentlichungsnummer: WO 2008/155294

(56) Entgegenhaltungen:
- EP-A- 0 462 729
- EP-A- 0 856 937
- US-A- 5 569 990
- CARDOLETTI L ET AL: "INDIRECT POSITION DETECTION AT STANDSTILL FOR BRUSHLESS DC AND STEP MOTORS" PROCEEDINGS OF THE EUROPEAN CONFERENCE ON POWER ELECTRONICS AND APPLICATIONS. (EPE). AACHEN, 9 - 12 OCTOBER, 1989, DUSSELDORF, EPE SECRETARIAT, DE, Bd. 3, 9. Oktober 1989 (1989-10-09), Seiten 1219-1222, XP000143540
- BENDJEDIA M ET AL: "DSP Implementation of Rotor Position Detection Method for Hybrid Stepper Motors" POWER ELECTRONICS AND MOTION CONTROL CONFERENCE, 2006. IPEMC '06. CES/IEEE 5TH INTERNATIONAL, IEEE, PI, 1. August 2006 (2006-08-01), Seiten 1-5, XP031014427 ISBN: 978-1-4244-0448-3

## Beschreibung

### Stand der Technik

Die Erfindung geht aus von einem Verfahren und einer Schaltungsanordnung zum Betreiben eines bürstenlosen Gleichstrommotors nach der Gattung der unabhängigen Ansprüche.

Gegenstand der vorliegenden Erfindung ist weiterhin eine elektrische Antriebsvorrichtung, insbesondere zum Antrieb eines Ventils für ein Heiz- und/oder Kühlsystem eines Kraftfahrzeuges, welche nach dem erfindungsgemäßen Verfahren oder der zugehörigen Schaltungsanordnung arbeitet.

Aus der DE 10 2005 007 995 A1 ist ein sensorloses Verfahren zur Bestimmung der Lage des Rotors eines elektronisch kommutierten Gleichstrommotors bekannt, dessen Statorstränge wechselnd mit einer Spannung beaufschlagt werden, um durch Auswertung der resultierenden Strangströme eine Zuordnung mindestens eines Statorstrangs zu mindestens einer magnetischen Achse des Rotors zu ermitteln. Dieses bekannte Verfahren beruht darauf, dass aufgrund der Verkettung der magnetischen Achsen des Rotors und des Stators sich in den verschiedenen Statorsträngen bei Spannungsbeaufschlagung unterschiedliche Stromverläufe ergeben, wobei durch die Ermittlung der Zeitdauer bis zum Erreichen eines bestimmten Stromniveaus die Strangstromverkettung und hieraus die Position des Rotors bestimmt werden können. Dieses Verfahren erzeugt jedoch aufgrund der relativ hohen Strangströme Geräusche und die Zeitdauer bis zum Erreichen eines vorgegebenen Stromniveaus ist verhältnismäßig lang.
Weiterhin dient dieses bekannte Verfahren nur zur Bestimmung der Ruhelage des Rotors, um eine möglichst korrekte Anfangsbestromung und damit ein möglichst großes Anfangsdrehmoment eines kontinuierlich betriebenen EC-Motors zur erzielen. Verfahren zum Ermitteln der Rotorposition von elektrischen Maschinen sind im Stand der Technik bekannt, z.B aus der Veröffentlichung : EP 0 856 937, CARDOLETTI L ET AL: "INDIRECT POSITION DETECTION AT STANDSTILL FOR BRUSHLESS DC AND STEP MOTORS" und BENDJEDIA M ET AL: "DSP Implementation of Rotor Position Detection Method for Hybrid Stepper Motors".

### Offenbarung der Erfindung

Das erfindungsgemäße Verfahren und die zugehörige Schaltungsanordnung mit den Merkmalen der unabhängigen Ansprüche haben den Vorteil, dass der Rotor, beziehungsweise das Getriebe, des elektronisch kommutierten bürstenlosen Gleichstrommotors mit geringem schaltungstechnischem Aufwand in einer vorgegebenen Stellung exakt positionierbar ist, wobei jeder zweite Schritt ohne die Verwendung diskreter Sensoren jeweils auf seine Durchführung überprüfbar und damit das Erreichen der vorgegebenen Position exakt gewährleistet ist.

Besonders vorteilhaft ist es, wenn der Schrittsteuerung des Motors eine Stromsteuerung, vorzugsweise eine pulsweitenmodulierte Stromsteuerung überlagert wird, weil hierdurch die notwendigen Anlaufmomente bei unterschiedlichen Belastungen des Motors sicher und schnell erreicht werden. Eine betriebssichere, grundsätzlich bekannte Ausführung der Schaltvorrichtung zum Bestromen des Motors ergibt sich, wenn die Stromsteuerung als kontinuierlich arbeitende Veränderung der Pulsweite der Stromimpulse ausgebildet ist, welche nach dem Anlaufen des Motors bei kontinuierlicher Schritterreichung wieder auf einen vorgegebenen Wert abgebaut wird.

Bei dem erfindungsgemäßen Betrieb des bürstenlosen Gleichstrommotors als Schrittmotor ist es vorteilhaft, wenn zur sensorlosen Positionsbestimmung die Statorwicklungen innerhalb der Schrittpausen mit den Teststromimpulsen beaufschlagt werden und mittels der Stromimpulse die positionsabhängige Induktivitätsänderung des Magnetkreises und damit die Anzahl der Umdrehungen des Rotors bestimmt wird. Hierbei ist es zweckmäßig, wenn die Phasenwicklungen des Stators nacheinander jeweils mit zwei Teststromimpulsen mit umgekehrter Polung beaufschlagt werden, um Bewegungen und Geräusche des Motors zu minimieren. Die Höhe der Spannungsimpulse zur Erzeugung der Teststromimpulse liegt dabei vorzugsweise niedriger als die Höhe der Versorgungsgleichspannung und die Teststromimpulse sind ungetaktet.

Zur Bestimmung des Anstiegs der Teststromimpulse in den einzelnen Phasen werden diese zweckmäßigerweise an einem Summationspunkt der Schaltvorrichtung für die Phasenwicklungen erfasst, vorzugsweise an einem gegen Masse geschalteten Shuntwiderstand, und anschließend der Steuervorrichtung zugeführt, in der wenigstens ein Teststromimpuls für jede Phase zunächst differenziert und anschließend sein Anstieg mit dem Anstieg der Impulse der übrigen Phasen verglichen wird. Vorzugsweise arbeitet das Ermittlungsverfahren für die Rotorlage so, dass die Differenz aus dem Maximalwert der Additionen der Stromanstiege gleich ausgerichteten Phasenlagen und des Mittelwertes der Stromanstiege in den restlichen Wicklungsphasen gebildet wird. Das Ergebnis dieser Addition wird dann zweckmäßigerweise zusätzlich noch auf die Überschreitung eines Schwellwertes als Kriterium für das Erreichen der überwachten Rotorposition überprüft, um sicher zu stellen, dass der gemessene Stromanstiegswert tatsächlich dem in der überwachten Rotorposition erwarteten Maximalwert entspricht, welcher zusätzlich von der Höhe der Speisespannung abhängig sein kann und dann entsprechend korrigiert werden muss. Bei Nichterreichen dieses Schwellwertes wird eine weitere Beaufschlagung der Statorphasen mit der Schrittbestromung durchgeführt und dabei erforderlichenfalls die Höhe der Bestromung vergrößert, wenn der Rotor wiederum in einer Zwischenstellung verbleibt.

Weitere Einzelheiten und vorteilhafte Ausgestaltungen des erfindungsgemäßen Verfahrens sowie der zugehörigen Schaltungsanordnung und der mit dem Verfahren, beziehungsweise der Schaltungsanordnung betriebenen elektrischen Antriebsvorrichtung ergeben sich aus den Unteransprüchen und aus der Beschreibung eines bevorzugten Ausführungsbeispiels eines dreiphasigen Motors. Die Anzahl der Phasen kann jedoch auch ein Vielfaches von drei betragen.

### Kurze Beschreibung der Zeichnungen

Ein Ausführungsbeispiel der Erfindung mit einem dreiphasigen Motor ist in den Zeichnungen dargestellt und in der nachfolgenden Beschreibung näher erläutert.

Es zeigen
- Figur 1: den prinzipiellen Aufbau einer Schaltungsanordnung zur Durchführung des erfindungsgemäßen Verfahrens,
- Figur 2: eine Darstellung des Flussverlaufes für einen Motorstrang mit der positionsabhängigen Nichtlinearität des Magnetkreises,
- Figur 3: eine vektorielle Zeigerdarstellung der Phasenlagen der Teststromimpulse entsprechend der Nummerierung der Endstufenschalter in Figur 1,
- Figur 4: ein Diagramm der einzelnen Verfahrensschritte zur Positionsbestimmung des Rotors,
- Figur 5: ein Diagramm des Stromverlaufes während der Aufschaltung der Teststromimpulse auf die Motorphasen,
- Figur 6: ein Diagramm der Stromverläufe in einer Schaltungsanordnung für eine elektrische Antriebsvorrichtung beim Öffnen und Schließen eines Regelventils,
- Figur 7: den prinzipiellen Aufbau eines ventilgesteuerten Heiz- und/oder Kühlsystems eines Kraftfahrzeuges und
- Figur 8: eine Schnittdarstellung einer elektrischen Antriebsvorrichtung für ein Ventil eines Heiz- und/oder Kühlsystems eines Kraftfahrzeuges.

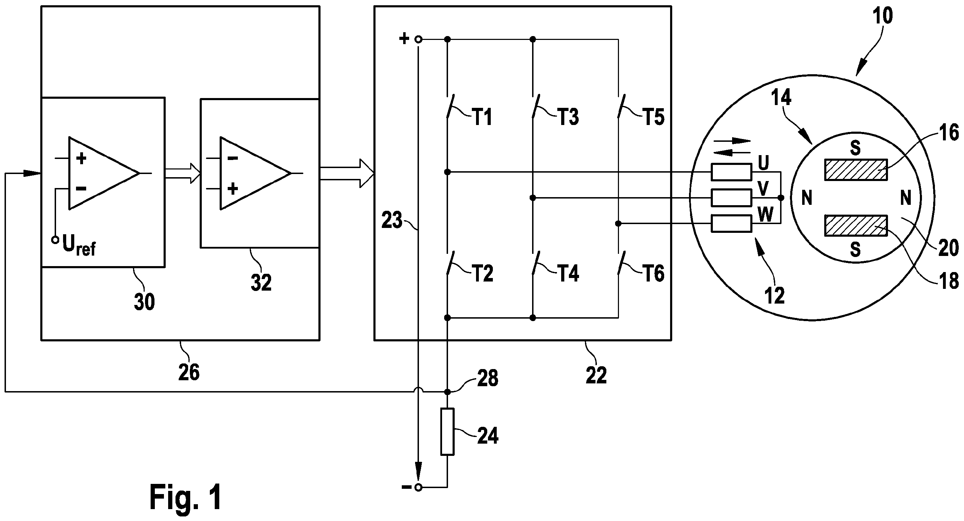

In Figur 1 ist mit 10 ein dreiphasiger bürstenloser Gleichstrommotor bezeichnet mit einem Stator 12 und einem Rotor 14. Die drei Statorphasen sind mit U,V,W bezeichnet und im Stern verschaltet. Der Rotor 14 ist als Folgepolrotor gestaltet mit zwei permanentmagnetischen Segmenten 16 und 18, deren außen liegende Südpole jeweils einen Rotorpol bilden, während die zugehörigen Nordpole der vierpoligen Anordnung sich im Rotoreisen 20 ausbilden. Entsprechend diesem Aufbau besitzt der Rotor 14 unterschiedliche magnetische Leitwerte in unterschiedlichen Achsen, welche zur Ermittlung der Rotorposition und damit zum Betreiben des Motors genutzt werden.

Zur Ansteuerung der Statorphasen U,V,W dient eine in bekannter Weise als Leistungsendstufe aufgebaute Schaltvorrichtung 22 mit Feldeffekttransistoren T1-T6. Die Transistoren T1, T3, T5 sind an den Pluspol einer Gleichspannungsquelle 23 angeschlossen, im vorliegenden Fall an den Pluspol der Batterie eines Kraftfahrzeuges. Die Verbindungen zwischen den Transistoren T1-T2, T3-T4 und T5-T6 sind an die Wicklungsphasen U,V,W angeschlossen, die von den Verbindungspunkten abgewandten Anschlüsse der Schalter T2, T4 und T6 liegen gemeinsam über einen Shuntwiderstand 24 an dem mit Masse verbundenen Minuspol der Gleichspannungsquelle 23.

Die Betätigung der Schaltvorrichtung 22 erfolgt durch eine Steuervorrichtung 26, welche bei der Verwendung in einem Kraftfahrzeug Teil der Motorsteuerung (Motronic) sein kann. Der Steuervorrichtung 26 wird die an einem Summationspunkt 28 am Shuntwiderstand 24 abgegriffene Summenspannung der Wicklungsphasen zugeführt, wozu auch die Spannungsabfälle aus den weiter unten noch näher erläuterten Teststromimpulsen an den Wicklungsphasen U,V,W gehören, welche in den Bestromungspausen der Statorphasen durch die Steuervorrichtung 26 auf die Statorwicklungen aufgeschaltet werden. Von der Steuervorrichtung 26 sind in Figur 1 nur die für das erfindungsgemäße Verfahren speziellen Baugruppen eines Differenzierers 30 und eines Addierers 32 dargestellt. Der weitere Aufbau der Steuervorrichtung 26, soweit er zum folgerichtigen Ansteuern der Schalter T1-T6 der Schaltvorrichtung 22 und zum folgerichtigen Bestromen der Statorphasen U,V,W benötigt wird, kann in bekannter Weise gestaltet werden und ist in der Darstellung nicht spezifiziert.

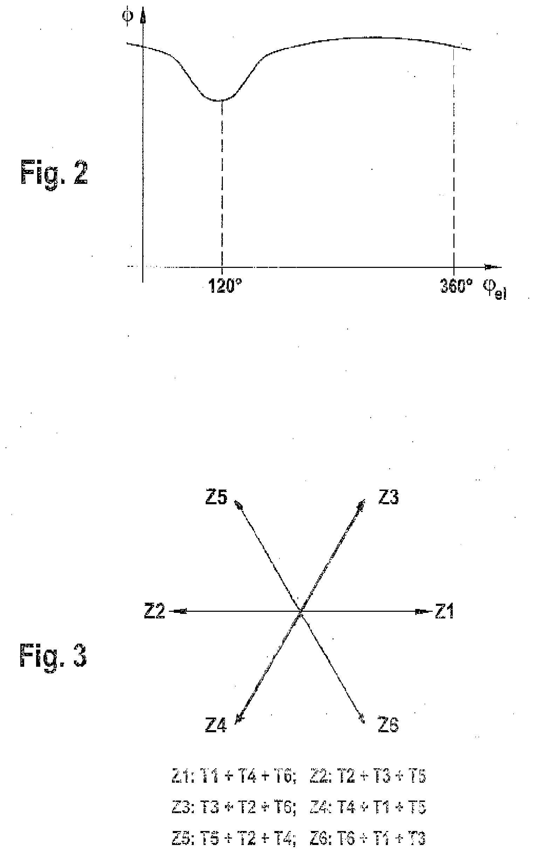

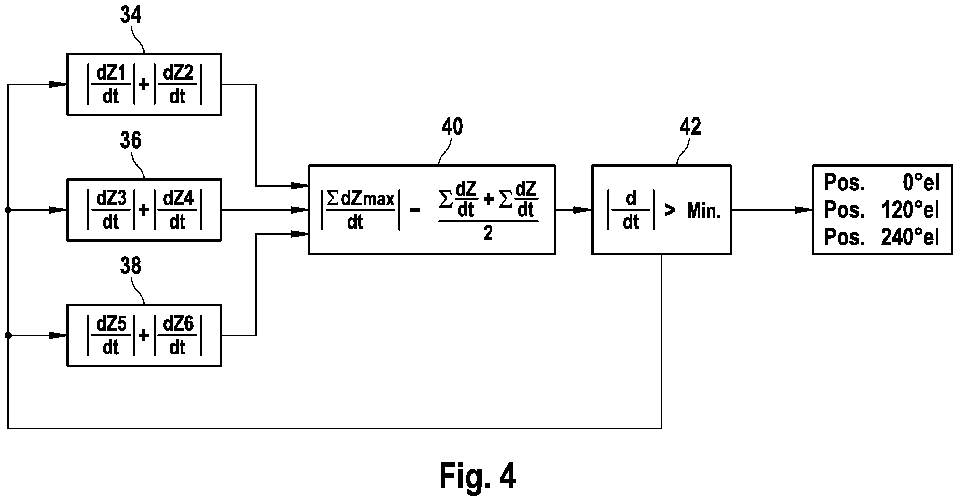

Figur 2 zeigt den Flussverlauf Φ in einer Phase des Motors mit einem deutlichen Einbruch bei einer Rotorstellung von 120°el, wie er insbesondere bei einer Folgepolgestaltung des Rotors auftritt. Da in dieser Rotorstellung beim Betrieb des Motors als Schrittmotor eine Bestromungspause der Statorphasen U,V,W vorliegt, kann hier die Aufschaltung von Teststromimpulsen erfolgen, wie dies weiter unten anhand der Figur 4 erläutert ist. Die Einsattelung in der Flusskurve bei 120°el ist dadurch bedingt, dass in diesem Bereich wegen der Ausrichtung der Permanentmagnete der magnetische Widerstand für den überlagerten Fluss aus der Vormagnetisierung des Rotors 14 durch die Permanentmagnete 16 und 18 und durch die Strangbestromung der Statorphasen U,V,W ein Minimum durchläuft. Die Induktivität der Magnete 16 und 18 entspricht der Induktivität von Luft und bewirkt in der 120°el-Position des Rotors 14 gegenüber dem den vollen Testimpulsstrom führenden Statorpol die Einsattelung im Flussverlauf, welche bei der Bestromung mit den Teststromimpulsen den Maximalanstieg des Stromes markiert. Dieser Effekt ist bei der in Figur 1 dargestellten Folgepolanordnung des Rotors 14 mit zwei Dauermagnetpolen 16 und 18 und zwei Magnetpolen im Eisen des Rotors besonders ausgeprägt.

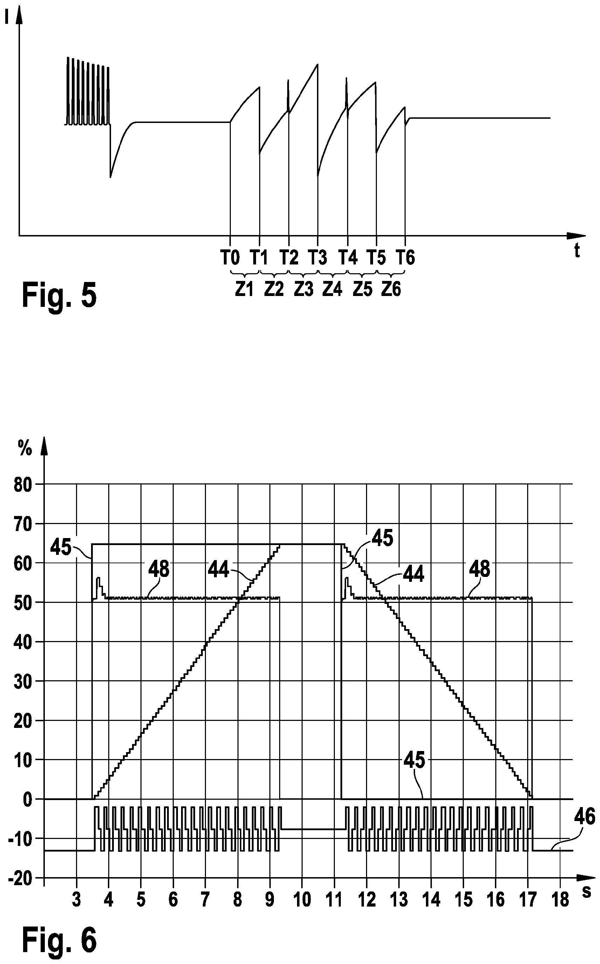

Figur 3 zeigt in einer vektoriellen Darstellung die Phasenlagen der sechs Spannungszeiger Z1-Z6 für eine dreiphasige Statorwicklung, wobei die Bezeichnung der Zeiger jeweils der 2/3-Stromführung der Transistoren T1-T6 der Schaltvorrichtung 22 entspricht. Hierbei sind die Zeiger Z1-Z2, Z3-Z4 und Z5-Z6 jeweils mit entgegengesetzten Vorzeichen in der gleichen Achse ausgerichtet, wodurch sich die Möglichkeit ergibt, durch unmittelbar aufeinander folgende Bestromung dieser Phasenlagen in den Schrittpausen die durch die Teststromimpulse verursachten Drehmomente am Rotor und die magnetischen Geräusche zu minimieren. Während der Bestromung der Statorphasen U,V,W mit den Teststromimpulsen sind die Schalter T1-T6 der Schaltvorrichtung 22 nicht getaktet. Die Motorstränge werden unmittelbar hintereinander für kurze Zeit mit der Spannung der Gleichspannungsquelle 23 in entgegengesetzten Richtungen beaufschlagt und die Stromanstiege ausgewertet, wie dies anhand der Figuren 4 und 5 erläutert wird. Die jeweils aktivierten Schalter der Schaltvorrichtung 22 zur Erzeugung der einzelnen Vektorzeiger Z1-Z6 sind unterhalb der Zeigerdarstellung in Figur 3 aufgelistet.

Durch die Auswertung der positionsabhängigen Nichtlinearität des Magnetkreises mit einem permanentmagnetischen, insbesondere als Folgepolanordnung gestalteten Rotor kann die Position des Rotors 14 nach jeweils 120°el bestimmt werden. Hierzu werden für einen dreiphasigen Motor die in Figur 3 dargestellten sechs Spannungszeiger Z1-Z6 auf die Statorphasen U,V,W ausgegeben, wobei jeweils 2/3 der Spannungsbeaufschlagung an einer Phase und jeweils 1/3 der Spannungsbeaufschlagung an den beiden anderen Phasenwicklungen abfällt. Die jeweils kurzzeitig und unmittelbar nacheinander stattfindende Bestromung in positiver und negativer Richtung über die entgegengesetzt liegenden Zeiger erfolgt teilweise in Richtung des Rotormagnetflusses und teilweise entgegen dem Rotormagnetfluss, ohne dass ein Sättigungseffekt auftritt. Betragsmäßig sind die jeweils entgegengerichteten Stromanstiege der Testimpulse etwa gleich, sodass sich nur eine geringe Anregung des Motors ergibt. Aus einer betragsmäßigen Addition der unterschiedlichen Stromanstiege je nach Stellung des Rotors 14 kann dann auf die Rotorposition geschlossen werden. Der unterschiedlich steile Stromanstieg der Teststromimpulse in den verschiedenen Zeigerlagen ergibt sich aus der Position der Magnete 16 und 18 des Rotors 14 entsprechend dem in Figur 2 dargestellten Flussverlauf über 180° mechanisch, beziehungsweise 360°el.

Figur 4 zeigt diagrammartig die Auswertung der Teststromimpulse. Hierbei werden zunächst entsprechend der Darstellung in den Blöcken 34, 36 und 38 betragsmäßig die Stromanstiege der Zeiger Z1 und Z2, Z3 und Z4, Z5 und Z6, addiert. Die Stromanstiege werden in dem Differenzierer 30 bestimmt und die Additionen in dem Addierer 32 der Steuervorrichtung 26 errechnet. Aus den betragsmäßig addierten Stromanstiegen ermittelt die Steuervorrichtung 26 dann den höchsten Stromanstieg und bildet gemäß der Darstellung in Block 40 die Differenz aus dem Maximalanstieg und dem Mittelwert der Stromanstiege in den beiden anderen Phasen. Die sich hierbei ergebende Differenz wird im Block 42 auf das Erreichen eines Mindestwertes überprüft, welcher maschinentypisch als charakteristischer Wert für die 120°el-Stellung des Rotors 14 vorher ermittelt worden ist. Wurde dieser Mindestwert erreicht oder überschritten, so ist damit die 120°el-Position des Rotors ermittelt. Ist dies nicht der Fall, so wird in der nächsten Schrittpause des Motors 10 eine weitere Testimpuls- Beaufschlagung der Statorphasen U,V,W durchgeführt, welche bei ausreichender Bestromung des Stators 12 bei einer 120°-Blockbestromung zwangsläufig zur Erkennung der 120°el- Position führt. Andernfalls wird die Stromsteuerung aktiviert und die Motorbestromung erhöht, um die Leistung des Motors einer höheren Belastung anzupassen. Die Schalter T1-T6 werden während der Bestromung der Statorphasen mit den Teststromimpulsen nicht getaktet sondern die Motorstränge werden direkt hintereinander für sehr kurze Zeit mit der vollen Versorgungsspannung der Gleichspannungsquelle 23 positiv und negativ beaufschlagt und das an dem Shuntwiderstand 24 abgegriffene Stromsignal in der Steuervorrichtung 26 analysiert. Dabei können der schematisch dargestellte Differenzierer 30 und der Addierer 32 sowohl hardwaremäßig als auch softwaremäßig realisiert sein. Prinzipiell wären für die Positionsbestimmung des Rotors 14 hierbei nur drei Differenzierungen notwendig, die jeweils entgegengerichtete Bestromung der einzelnen Phasen gewährleistet jedoch einen weitgehenden Momentenausgleich im Motor bei der Beaufschlagung mit den Teststromimpulsen und einen höheren Störabstand bei der Umsetzung des Verfahrens. Da das erfindungsgemäße Verfahren auf einer Differenzierung der Teststromimpulse beruht arbeitet es sehr schnell und erlaubt eine Positionsermittlung in wenigen Millisekunden. Für die Differenzierung der Teststromimpulse kann dabei ein Zeitschritt dt von einigen 100µsec gewählt werden.

Die Überschreitung des Mindestwertes im Block 42 der Figur 4 bedeutet, dass die Position des Rotors mit einer Auflösung von 120°el bestimmt ist. Die Höhe des Mindestwertes ist dabei neben der Motorbauart auch von der Höhe der Versorgungsgleichspannung abhängig und muss gegebenenfalls bei Spannungsschwankungen an der Gleichspannungsquelle 23 korrigiert werden.

Figur 5 zeigt die Signalverläufe der Teststromimpulse während der Positionsermittlung in den Schrittpausen, wobei links noch das abklingende 20kHz-PWM-Signal zu erkennen ist. Die Zeitpunkte T0-T5 markieren jeweils den Beginn und die Zeitpunkte T1-T6 jeweils das Ende eines Teststromimpulses entsprechend einem der Zeiger Z1-Z6. Bei der dargestellten Messung liegen die größten Stromanstiege bei den Zeigern Z3 und Z4 zwischen T2 und T3 und zwischen T3 und T4. Diese Anstiege werden entsprechend der Darstellung in Figur 4 betragsmäßig addiert und hiervon der Mittelwert, das heißt die Hälfte der betragsmäßigen Addition der Anstiegszeiten der Zeiger Z1-Z2 und Z5-Z6 abgezogen und anschließend das Erreichen des vorgegebenen Schwellwertes geprüft. Die Höhe der Teststromimpulse ist dabei deutlich niedriger als die Höhe der PWM-Bestromung und beträgt beispielsweise 1/3 dieser Werte. Die Zeitdauer für die Positionsermittlung entspricht der Zeitspanne von T0-T6, zuzüglich der etwa gleich großen Zeitspanne für das Abklingen des Phasenstromes.

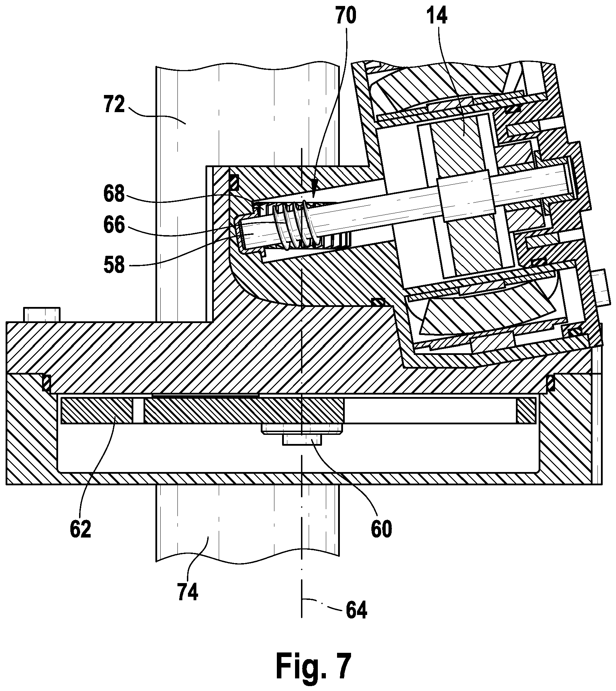

Figur 6 zeigt die Messergebnisse bei der Anwendung des erfindungsgemäßen Verfahrens zur Positionierung der Regelscheibe 62 eines Ventils gemäß Figur 7. Hierbei definiert die schrittweise ansteigende Linie 44 das Öffnen des Ventils. Es folgt ein kurzer offener Zustand und anschließend im Bereich der gestuft abfallenden Linie 44 das Schließen des Ventils. Der Kurvenverlauf 45 zeigt die Sollposition des Ventils. Mit der Schrittbestromung eines dreiphasigen Motors ergeben sich für einen Schritt 360°el:6=60°el. Nach dem Auffinden einer 120°el-Position müssen also zwei Schritte gemacht werden um die nächste messbare Position zu erreichen. Falls eine Zwischenstellung entdeckt wird, erfolgt noch ein weiterer Schritt in die gleiche Richtung entsprechend der vorgegebenen Drehrichtung des Motors und danach bei Nichterreichung der nächsten messbaren Position eine Stromerhöhung, solange, bis eine eindeutige Position wieder gefunden wurde. Die einzelnen 120°el-Positionen sind am unteren Rand der Darstellung aus dem Kurvenverlauf 46 erkennbar. Der Kurvenverlauf 48 zeigt die PWM-Bestromung des Motors als prozentuale Angabe. Aus dieser Darstellung ist die überlagerte Stromsteuerung beim Anlaufen des Motors erkennbar, welche dann sehr schnell in gleichen Stufen abgebaut wird bis zum Erreichen der vorgegebenen Sollbestromung. Die Dauer des Verstellvorgangs des Ventils beim Öffnen und Schließen beträgt bei dieser Ausführung jeweils cirka 6 Sekunden.

An dieser Stelle soll noch erwähnt werden, dass das erfindungsgemäße Verfahren zur sensorlosen Positionsüberwachung der Motorschritte nicht nur beim Schrittbetrieb eines EC-Motors sondern auch zur Anlaufsteuerung eines kontinuierlich betriebenen bürstenlosen Gleichstrommotors mit permanentmagnetischer Erregung verwendet werden kann. In diesem Fall könnte das erfindungsgemäße Verfahren den Hochlauf des Motor so lange steuern, bis genügend Rotationsenergie vorhanden ist, um auf bekannte Verfahren, beispielsweise die Ermittlung der Rotorposition aus den in den unbestromten Phasen des Stators induzierten Spannungen umzuschalten.

Figur 7 zeigt die Anwendung des erfindungsgemäßen Verfahrens und/oder der zugehörigen Schaltungsanordnung für ein Ventil eines Heiz- und/oder Kühlsystems eines Kraftfahrzeuges. Die Antriebswelle 58 des antreibenden Elektromotors verläuft unter einem Winkel ungleich 90° zur Abtriebswelle 60 des Ventilelementes 62, die in Figur 7 durch ihre Achse 64 kenntlich ist. Auf die Antriebswelle 58 des elektromotorischen Antriebs 10,14 aufgesetzt, beziehungsweise aus dieser herausgebildet ist die Schnecke 66, die mit dem Schraubrad 68 kämmt.

Wie in Figur 7 im Detail dargestellt, wird das Schnecken-Schraubrad-Getriebe 70 in vorteilhafter Weise so ausgeführt, dass durch die Schrägstellung des Schneckenantriebs 66 ein geradverzahntes Stirnrad 68 zum Einsatz kommen kann. Dazu wird der Schrägungs- beziehungsweise Steigungswinkel der Schnecke 66 so gewählt, dass er exakt der Summe aus dem Achswinkel und 90° entspricht. Damit wird das Auftreten axialer Lagekräfte für das Stirnrad vermieden und eine verdrehfreie Montage des Stirnrades 68 ermöglicht. Das Getriebe ist in als nasslaufendes Getriebe mit dem ebenfalls nasslaufenden Rotor 14 des elektromotorischen Antriebs 10 verbunden. Dabei bilden der Ventilkörper 62 und ein axial an dem Ventilkörper angefedertes Dichtelement eine Barriere zur Reinhaltung des nasslaufenden Getriebebereichs gegenüber Feststoffen.

Der Rotor 14 eines solchen nasslaufenden Antriebes könnte ganz oder teilweise aus Se-Magneten hoher Remanenz gebildet sein. Aus Gründen der Korrosionsbeständigkeit sollte das Se-Material dabei jedoch gekapselt sein.

Die Abdichtung des Ventilgehäuses gegenüber dem Einlasskanal 72 und dem Auslasskanal 74 erfolgt ebenfalls über eine hydrodynamische Abdichtung zwischen zwei aufeinander rotierenden Gleitpartnern in Verbindung mit einer hydrostatischen Vorspannung, so dass die Leckage-Raten bei geschlossenem Kühlkreislauf nahezu Null sein können.

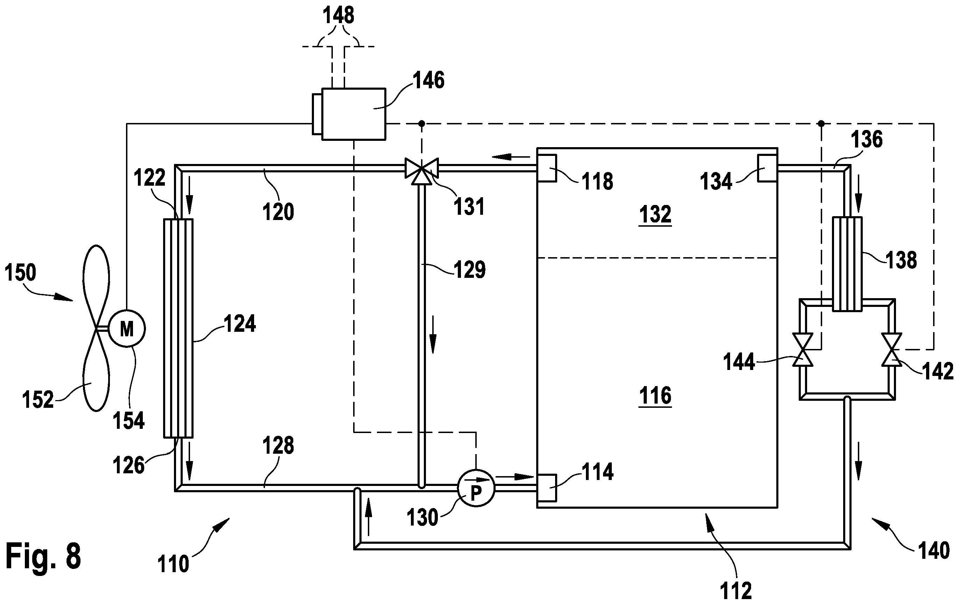

Figur 8 zeigt in schematischer Darstellung einen Kühl- und Heizkreislauf 110 zur Kühlung eines Verbrennungsmotors 112 mit einem Kühlmittelsteuerventil 131. Der Verbrennungsmotor 112 verfügt über einen ersten Kühlmitteleinlass 114 im Bereich seines Motorblocks 116, sowie über einen ersten Kühlmittelauslass 118, der über eine Zulaufleitung 120 und einen Kühlereinlass 122 mit einem Kühler 124 des Kühlkreislaufs 110 verbunden ist. Der Kühler 124 ist wiederum über einen Kühlerauslass 126 und eine Verbindungsleitung 128 mit dem Kühlmitteleinlass 114 des Verbrennungsmotors 112 verbunden.

Zur Umwälzung des Kühlmittels im Kühlkreislauf 110 des Verbrennungsmotors 112 befindet sich in der Verbindungsleitung 128 eine Kühlmittelpumpe 130, die im Ausführungsbeispiel der Figur 8 elektronisch geregelt ist. Rein mechanische Kühlmittelpumpen sind in anderen Ausführungsbeispielen für einen Kühl- und Heizkreislauf ebenso möglich.

Im Bereich des Zylinderkopfes 132 des Verbrennungsmotors 112 befindet sich ein zweiter Kühlmittelauslass 134 der über eine Verbindungsleitung 136 mit einem Heizungswärmetauscher 138 eines Heizungsteilzweiges 140 verbunden ist. In diesem Heizungszweig 140 wird ein Teil des aus dem Motor 112 austretenden, erwärmten Kühlmittels genutzt, um über den Heizungswärmetauscher 138 die im heißen Kühlmittel gespeicherte Wärmeenergie zur Beheizung, beispielsweise des Fahrzeuginnenraumes, zu nutzen. Die bedarfsgerechte Regelung der Heizfunktion ist schematisch nur durch die gesteuerten Heizungsventile 142 beziehungsweise 144 angedeutet.

Von der Zulaufleitung 120 des Kühl- und Heizkreislaufs 110 zweigt eine Bypassleitung 129 ab, die parallel zum Kühlerelement 124 verläuft und die Zulaufleitung 120 direkt mit der Verbindungsleitung 128 zwischen dem Kühlerauslass 126 und dem Kühlmitteleinlass 114 des Motors verbindet. Zur Regelung der relativen Volumenströme durch das Kühlerelement 124 einerseits, beziehungsweise die Bypassleitung 129 andererseits, ist im dargestellten Ausführungsbeispiel eines Kühl- und Heizkreislaufs ein Dreiwege-Bypassventil 131 vorgesehen, welches von dem Steuergerät 26, beziehungsweise 146, angesteuert und geregelt wird.

Die Heizungsventile 142 beziehungsweise 144 des Heizungsteilzweiges 140 werden ebenso wie das Bypassventil 131 über das Steuergerät 146 angesteuert und geregelt. Das Steuergerät 146, welches beispielsweise auch das Motorsteuergerät des Fahrzeuges sein kann, ist mit diversen Sensoren verbunden, die in Figur 8 der Übersicht halber nicht dargestellt sind und lediglich durch elektrische Verbindungsleitungen 148 angedeutet sind. Über diese Sensoren werden dem Steuergerät 146 aktuelle Parameter des Kühlkreislaufs beziehungsweise des Motors zugeleitet, die dann mit einer im Steuergerät abgelegten Bedatung verglichen werden können, um daraus entsprechende Stellgrößen für die aktiven Komponenten des Kühl- und Heizkreislaufs 110 zu ermitteln. Neben den Parametern des Kühlkreislaufs 110, wie beispielsweise der Kühlmitteltemperatur, wird auch die Motortemperatur, und insbesondere die Motortemperatur an verschiedenen temperaturkritischen Stellen des Motors, an das Steuergerät 146 übermittelt. Als weitere Eingangssignale für das Steuergerät können darüber hinaus auch der Kraftstoffverbrauch, sowie die Schadstoffemission des Verbrennungsmotors über entsprechende Sensoren an das Steuergerät übermittelt werden.

Das Steuergerät 146 dient im Ausführungsbeispiel der Figur 8 gleichzeitig der bedarfsgerechten Ansteuerung eines Kühlgebläses 150, welches zur Erhöhung der Kühlleistung des Kühlsystems dem Kühler 124 des Kühlkreislaufs zugeordnet ist. Das Kühlgebläse 150 besteht aus einem Lüfter 152 und einem den Lüfter antreibenden Motor 154, der seine Ansteuerungsdaten und die Energieversorgung über entsprechende, elektrische Verbindungsleitungen vom Steuergerät 146 erhält. Darüber hinaus regelt das Steuergerät 146 unter Anderem auch die Leistung der Kühlmittelpumpe 130.

Im Speziellen wird vom Steuergerät 146 jeweils eine Stellgröße für die Aktuatoren der Ventile 131, 142 und 144 sowie weiterer, in der vereinfachten Darstellung eines Kühlkreislaufs nach Figur 8 nicht dargestellter Ventile errechnet, um die aktuelle Motor-Ist-Temperatur auf eine optimale Motor-Soll-Temperatur einzuregeln. Die Ansteuerung der Aktuatoren der erfindungsgemäßen Ventile des Kühl- und Heizkreislaufs 110 geschieht derart, dass der durch die Ventile geregelte Volumenstrom möglichst linear proportional zu der Stellgröße für den jeweiligen Aktuator ist. Auf diese Weise lassen sich die Ventile exakt nach den Vorgaben des Steuergerätes stellen, so dass der Kühlmittelvolumenstrom sehr genau an die Vorgaben, beispielsweise eines in der Steuereinheit 146 abgelegten zeitabhängigen Temperaturmodells für den Motor, angepasst werden kann. Zur Einstellung der optimalen Motortemperatur wird mit Hilfe der steuerbaren Ventile der relative Kühlmittelvolumenstrom durch den Kühler 124 beziehungsweise durch die Bypassleitung 129 geregelt. So kann beispielsweise in der Startphase des Motors 112 die Verbindungsleitung 120 zum Motorkühler 14 vollständig geschlossen werden und das erfindungsgemäße Bypassventil 131 in Richtung der Bypassleitung 129 gegebenenfalls vollständig oder aber auch nur geringfügig geöffnet werden. Auf diese Weise ist eine schnelle Erreichung der optimalen Arbeitstemperaturen des Motors 112 möglich, so dass die Betriebsbedingungen des geringeren Kraftstoffverbrauchs sowie der geringeren Schadstoffemission des Motors frühzeitig erreicht werden können. Nach Erreichen der optimalen Motortemperatur wird die Kühlerzuleitung 120 durch das Bypassventil 131 geöffnet und die Bypassleitung 129 kann in entsprechendem Maße geschlossen werden, um die überschüssige, durch den Motor erzeugte Wärmeenergie über das Kühlerelement 124 sowie das Kühlgebläse 150 an die Umgebung abgeben zu können. Ebenso ist es möglich, über das Bypassventil 131 sowohl die Bypassleitung 129, als auch die Zuleitung zum Kühler gleichzeitig zu verschließen.

## Patentansprüche

1. Verfahren zum Betreiben eines bürstenlosen Gleichstrommotors (10) mit einem permanentmagnetisch erregten Rotor (14) mit unterschiedlichen magnetischen Leitwerten in unterschiedlichen magnetischen Achsen, insbesondere in der Ausführung als Folgepolrotor, und mit einem eine dreiphasige Statorwicklung tragenden Stator (12), sowie mit einer von einer Steuervorrichtung (26) gesteuerten Schaltvorrichtung (22) zum folgerichtigen Bestromen von in einem Stern verschalteten Wicklungsphasen (U, V, W) der Statorwicklung aus einer Gleichspannungsquelle (23), wobei durch die Schaltvorrichtung (22) Teststromimpulse (Z1-Z6) auf die Statorwicklung aufgeschaltet werden und der Stromanstieg in den Statorphasen (U, V, W) überwacht wird, der Motor (10) als Schrittmotor betrieben und die Ausführung der einzelnen Schritte durch eine sensorlose Positionsüberwachung geprüft wird und wobei die Höhe der Teststromimpulse (Z1-Z6) der einzelnen Phasen (U, V, W) an einem Summationspunkt (28) der Schaltvorrichtung (22) erfasst und in einer nachfolgenden Steuerschaltung (26) differenziert und anschließend addiert werden und aus der Summe die Rotorlage ermittelt wird, **dadurch gekennzeichnet, dass** die Differenz (40) aus dem Maximalwert der Additionen der Stromanstiege mit gleich ausgerichteten Phasenlagen (34, 36, 38) und des Mittelwertes der Stromanstiege in den restlichen Wicklungsphasen (U, V, W) gebildet und auf die Überschreitung eines Schwellwertes (42) als Kriterium für das Erreichen der überwachten Rotorposition (120°el) überprüft wird.

2. Verfahren nach Anspruch 1, **dadurch gekennzeichnet, dass** der Schrittsteuerung eine pulsweitenmodulierte Stromsteuerung (48) überlagert ist.

3. Verfahren nach Anspruch 2, **dadurch gekennzeichnet, dass** die Stromsteuerung (48) als kontinuierliche Veränderung der Pulsweite ausgebildet ist.

4. Verfahren nach einem der vorhergehenden Ansprüche, **dadurch gekennzeichnet, dass** eine Erhöhung der Bestromung bei kontinuierlicher Schritterreichung wieder auf einen vorgegebenen Wert abgebaut wird.

5. Verfahren nach einem der vorhergehenden Ansprüche, **dadurch gekennzeichnet, dass** die Statorwicklungen (U, V, W) zur sensorlosen Positionsbestimmung innerhalb der Schrittpausen mit den Teststromimpulsen (Z1-Z6) beaufschlagt werden und mittels der Teststromimpulse (Z1-Z6) die positionsabhängige Nichtlinearität des Magnetkreises (Φ) bestimmt wird.

6. Verfahren nach einem der vorhergehenden Ansprüche, **dadurch gekennzeichnet, dass** die Schaltvorrichtung (22) beim Bestromen der Motorphasen (U, V, W) mit den Teststromimpulsen (Z1-Z6) ungetaktet betrieben wird.

7. Verfahren nach einem der vorhergehenden Ansprüche, **dadurch gekennzeichnet, dass** die Phasenwicklungen (U, V, W) des Stators (12) zur Erzeugung der Teststromimpulse (Z1-Z6) nacheinander jeweils mit Spannungsimpulsen mit umgekehrter Polung beaufschlagt werden.

8. Verfahren nach einem der vorhergehenden Ansprüche, **dadurch gekennzeichnet, dass** für jede Wicklungsphase (U, V, W) des Stators (12) wenigstens ein Teststromimpuls (Z1-Z6) erzeugt und differenziert wird und aus der Steilheit des Stromanstiegs die Lage des Rotors (14) ermittelt wird.

9. Schaltungsanordnung zur Durchführung des Verfahrens nach einem der vorhergehenden Ansprüche, **dadurch gekennzeichnet, dass** die im Stern verschalteten Phasenwicklungen (U, V, W) des Stators (12) eines elektronisch kommutierten Gleichstrom-Schrittmotors (10) über eine vorzugsweise unter Verwendung von Feldeffekttransistoren (T1-T6) gebildete Schaltvorrichtung (22) einerseits mit dem Pluspol einer Gleichspannungsquelle (23) und andererseits über einen Summations-Shuntwiderstand (24) mit Masse verbunden sind, wobei die an dem Shuntwiderstand (24) abfallende Messspannung einer einen Differenzierer (30) und einen Addierer (32) enthaltenden Steuervorrichtung (26) für die Schaltvorrichtung (22) zugeführt wird.

10. Elektrische Antriebsvorrichtung, insbesondere für ein Ventil eines Heiz- und/oder Kühlsystems eines Kraftfahrzeuges, mit einem gemäß dem Verfahren nach einem der Ansprüche 1 bis 8 betriebenen bürstenlosen Gleichstrommotor (10) und/oder mit einer Schaltungsanordnung nach Anspruch 9.

## Claims

1. Method for operating a brushless DC motor (10) having a rotor (14) with permanent magnet excitation and with different magnetic conductances in different magnetic axes, in particular when implemented as a consequent-pole-type rotor, and having a stator (12) carrying a three-phase stator winding, and having a switching apparatus (22) controlled by a control apparatus (26) for consecutive energization of winding phases (U, V, W) of the stator winding that are interconnected in star from a DC voltage source (23), wherein test current pulses (Z1-Z6) are connected to the stator winding by the switching apparatus (22) and the current rise in the stator phases (U, V, W) is monitored, the motor (10) is operated as a stepper motor and the implementation of the individual steps is checked by a sensorless position monitoring system and wherein the level of the individual test current pulses (Z1-Z6) of the individual phases (U, V, W) are detected at a summation point (28) of the switching apparatus (22) and in a subsequent control circuit (26) are differentiated and then added and the rotor position is determined from the sum, **characterized in that** the difference (40) is formed from the maximum value of the additions of the current rises with identically oriented phases (34, 36, 38) and the mean of the current rises in the remaining winding phases (U, V, W) and is checked for exceedance of a threshold value (42) as a criterion for attaining the monitored rotor position (120°el).

2. Method according to Claim 1, **characterized in that** a pulse-width-modulated current control operation (48) is superposed on the step control operation.

3. Method according to Claim 2, **characterized in that** the current control operation (48) is designed as a continuous changing of the pulse width.

4. Method according to one of the preceding claims, **characterized in that** an increase in energization in the case of continuous step attainment is reduced again to a prescribed value.

5. Method according to one of the preceding claims, **characterized in that**, for the sensorless position determination, within the step pauses, the stator windings (U, V, W) are subjected to the test current pulses (Z1-Z6) and the position-dependent non-linearity of the magnetic circuit (Φ) is determined by means of the test current pulses (Z1-Z6).

6. Method according to one of the preceding claims, **characterized in that**, when energizing the motor phases (U, V, W), the switching apparatus (22) is operated in an unclocked manner using the test current pulses (Z1-Z6) .

7. Method according to one of the preceding claims, **characterized in that**, in order to generate the test current pulses (Z1-Z6), the phase windings (U, V, W) of the stator (12) are each consecutively subjected to voltage pulses having a reversed polarity.

8. Method according to one of the preceding claims, **characterized in that**, for each winding phase (U, V, W) of the stator (12), at least one test current pulse (Z1-Z6) is generated and differentiated and the position of the rotor (14) is determined from the gradient of the current rise.

9. Circuit arrangement for carrying out the method according to one of the preceding claims, **characterized in that** the phase windings (U, V, W) of the stator (12) of an electronically commutated DC stepper motor (10), said phase windings being interconnected in star, on the one hand are connected to the positive pole of a DC voltage source (23) by way of a switching apparatus (22), which is preferably formed using field-effect transistors (T1-T6), and on the other hand are connected to earth by way of a summation shunt resistor (24), wherein the measurement voltage dropped across the shunt resistor (24) is fed to a control apparatus (26) for the switching apparatus (22), said control apparatus containing a differentiator (30) and an adder (32) .

10. Electric drive apparatus, in particular for a valve of a heating and/or cooling system of a motor vehicle, having a brushless DC motor (10) operated in accordance with the method according to one of Claims 1 to 8 and/or having a circuit arrangement according to Claim 9.

## Revendications

1. Procédé pour faire fonctionner un moteur à courant continu sans balais (10) comprenant un rotor (14) à excitation magnétique permanente ayant des perméances magnétiques différentes dans des axes magnétiques différents, notamment dans l'exécution sous la forme d'un rotor à pôles conséquents, et comprenant un stator (12) portant un enroulement statorique triphasé, et comprenant aussi un dispositif de commutation (22) commandé par un dispositif de commande (26) pour l'alimentation électrique conséquente de phases d'enroulement (U, V, W) branchées en étoile de l'enroulement statorique à partir d'une source de tension continue (23), des impulsions de courant de test (Z1 à Z6) étant appliquées sur l'enroulement statorique par le dispositif de commutation (22) et l'augmentation du courant dans les phases de stator (U, V, W) étant surveillé, le moteur (10) fonctionnant comme un moteur pas à pas et l'exécution des pas individuels étant contrôlée par un système de surveillance de position sans capteur et les amplitudes des impulsions de courant de test (Z1 à Z6) des phases (U, V, W) individuelles étant détectées au niveau d'un point de totalisation (28) du dispositif de commutation (22) pour ensuite être soumises à un calcul de différence puis additionnées dans un circuit de commande (26) qui suit, et la position du rotor étant déterminée à partir de la somme, **caractérisé en ce que** la différence (40) entre la valeur maximale des additions des augmentations du courant avec des positions de phase (34, 36, 38) orientées à l'identique et la valeur moyenne des augmentations du courant dans les autres phases d'enroulement (U, V, W) est calculée et un contrôle est effectué pour vérifier le dépassement d'une valeur de seuil (42) en tant que critère indiquant que la position de rotor surveillée (120° el) est atteinte.

2. Procédé selon la revendication 1, **caractérisé en ce qu'**une commande de courant (48) à modulation d'impulsions en largeur est superposée à la commande pas à pas.

3. Procédé selon la revendication 2, **caractérisé en ce que** la commande de courant (48) est réalisée sous la forme d'une modification continue de la largeur d'impulsion.

4. Procédé selon l'une des revendications précédentes, **caractérisé en ce qu'**une augmentation de l'alimentation électrique lorsque le pas est continuellement atteint est de nouveau réduite à une valeur prédéfinie.

5. Procédé selon l'une des revendications précédentes, **caractérisé en ce que** les enroulements statoriques (U, V, W) sont soumis aux impulsions de courant de test (Z1 à Z6) au sein des pauses entre les pas en vue de la détection de position sans capteur et la non-linéarité dépendante de la position du circuit magnétique (Φ) est déterminée au moyen des impulsions de courant de test (Zl à Z6).

6. Procédé selon l'une des revendications précédentes, **caractérisé en ce que** le dispositif de commutation (22), lorsque les phases de moteur (U, V, W) sont alimentées avec les impulsions de courant de test (Zl à Z6), fonctionne de manière non cadencée.

7. Procédé selon l'une des revendications précédentes, **caractérisé en ce que** les enroulements de phase (U, V, W) du stator (12), en vue de générer les impulsions de courant de test (Zl à Z6), sont respectivement soumis les uns après les autres à des impulsions de tension à polarité inverse.

8. Procédé selon l'une des revendications précédentes, **caractérisé en ce que** pour chaque phase d'enroulement (U, V, W) du stator (12), au moins une impulsion de courant de test (Zl à Z6) est générée puis soumise à un calcul de différence et la position du rotor (14) est déterminée à partir de la pente d'augmentation du courant.

9. Arrangement de circuit destiné à mettre en oeuvre le procédé selon l'une des revendications précédentes, **caractérisé en ce que** les enroulements de phase (U, V, W) branchés en étoile du stator (12) d'un moteur pas à pas à courant continu (10) à commutation électronique sont reliés par le biais d'un dispositif de commutation (22) réalisé de préférence en utilisant des transistors à effet de champ (Tl à T6) d'un côté au pôle positif d'une source de tension continue (23) et de l'autre côté à la masse par le biais d'une résistance shunt de totalisation (24), la chute de tension de mesure aux bornes de la résistance shunt (24) étant acheminée à un dispositif de commande (26) contenant un différentiateur (30) et un additionneur (32) pour le dispositif de commande (22).

10. Dispositif d'entraînement électrique, notamment pour une vanne d'un système de chauffage et/ou de refroidissement d'un véhicule automobile, comprenant un moteur à courant continu sans balais (10) qui fonctionne conformément au procédé selon l'une des revendications 1 à 8 et/ou comprenant un arrangement de circuit selon la revendication 9.
